# EUROPEAN PATENT APPLICATION

(11) **EP 1 842 928 A1**
(43) Date of publication of application: **10.10.2007**
(21) Application number: 07405083.2
(22) Date of filing: 13.03.2007
(51) Int. Cl.: C21D 1/09

(54) **Laser hardening method**

(30) Priority: 06.04.2006 JP 2006105455
(71) Applicant: YAMAZAKI MAZAK CORPORATION, Niwa-gun, Aichi (JP)
(72) Inventor: Yamazaki, Tsunehiko, c/o Yamazaki Mazak Corp., Niwa-gun, Aichi pref. (JP); Miyakawa, Naoomi, c/o Yamazaki Mazak Corp., Niwa-gun, Aichi pref. (JP)
(74) Representative: Moinas, Michel

(57) **Abstract**

The invention provides a laser hardening method capable of preventing adjacent already-hardened layers from being annealed. In the laser hardening method of the present invention, conduits C₁, C₂ and C₃ are processed in advance midway between pitches P₁ along which a hardening nozzle 190 performs overlap hardening. After moving the nozzle 190 along a center line L₃ to process a hardening layer H₂₃, the nozzle 190 is moved in parallel for a single pitch P₁ to perform hardening of a hardening layer H₂₄. Thermal energy E₁ of the laser beam LB is also irradiated toward the direction of the hardening layer H₂₃, but it is blocked by the conduit C₃ that prevents the laser beam from annealing the hardening layer H₂₃.

## Description

### BACKGROUND OF THE INVENTION

### Field of the invention

The present invention relates to a hardening method utilizing semiconductor laser.

### Description of the related art

Japanese Patent Application Laid-Open Publication No. 2003-138314 (patent document 1) discloses an example of a laser hardening device proposed by the present applicant. Japanese Patent Application Laid-Open Publication No. 2005-238253 (patent document 2) discloses a laser hardening tool removably attached to a tool post of a machine tool.

According to the disclosed laser hardening tools, the laser beam from the laser emission source such as the semiconductor laser bar or the semiconductor laser stack is transmitted via an optical fiber or a waveguide to a torch disposed at a leading end of the tool.

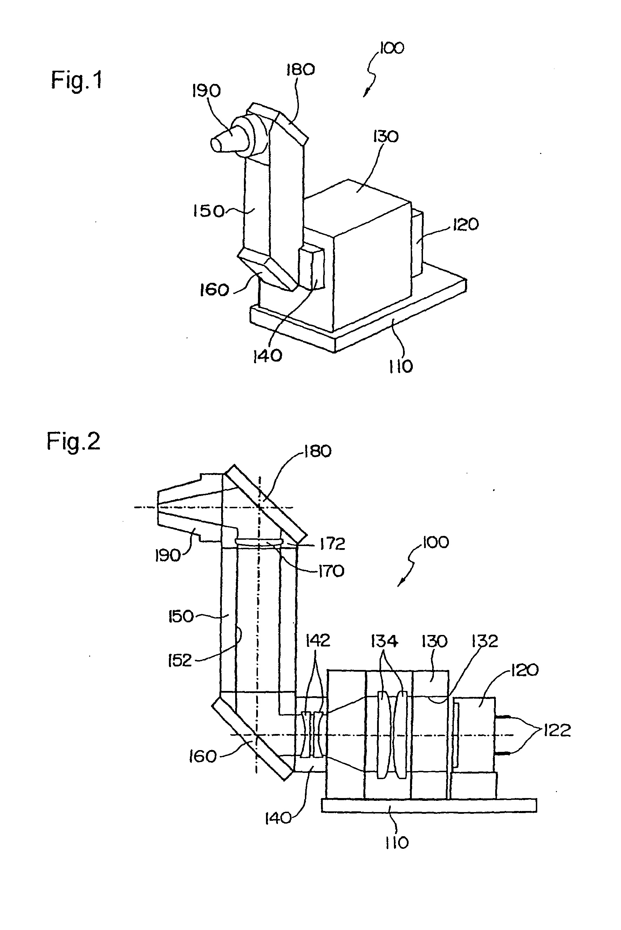

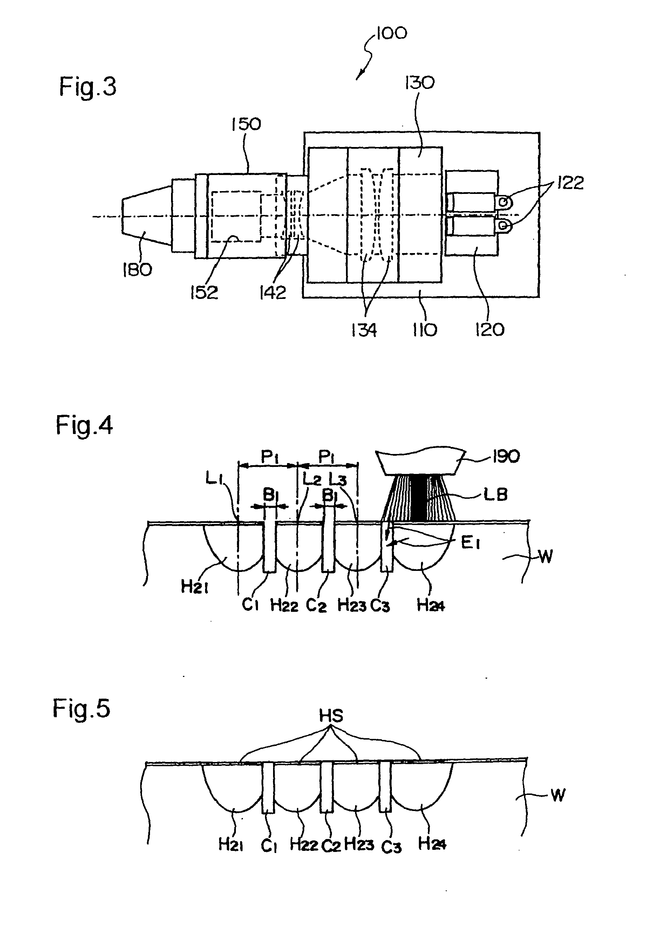

FIG. 1 is a perspective view of a laser hardening tool used in the laser hardening method of the present invention, FIG. 2 is a cross-sectional side view illustrating the overall structure of the laser hardening tool, and FIG. 3 is an upper view of FIG. 2.

The laser hardening tool denoted as a whole by reference number 100 is equipped with a semiconductor laser stack 120 mounted on a base 110. The semiconductor laser stack 120 has power supply connecting terminals 122, through which it is connected to a power supply not shown.

The output of the semiconductor laser stack 120 is sent into a holder 130 with an optical passage 132. A condensing optical system (lens) 134 is equipped on the optical passage 132 of the holder 130 for condensing the output beams from the semiconductor laser stack 120.

The condensed laser beams are entered to a diverging optical lens 142 within a holder 140, where they are diverged so that the axis lines of the beams become parallel. The diverged laser beams are sent to a first mirror 160 attached to one end of a rectangular optical waveguide 150. The laser beams having been turned by the mirror 160 toward the axial direction of the rectangular optical waveguide 150 proceed while reflecting on a reflecting surface 152 on the inner side of the rectangular optical waveguide 150, and enter a re-condensing optical lens 170 within a holder 172.

The laser beams passing through the rectangular optical waveguide 150 are reflected for a smaller number of times compared to when passing through a prior-art optical waveguide having a circular cross-section, and thus, the beams are subjected to less attenuation.

The laser beams being re-condensed by the re-condensing optical lens 170 have their axis lines changed for 90 degrees by a second mirror 180, and are irradiated through an optical waveguide nozzle 190 to harden a surface of a work not shown.

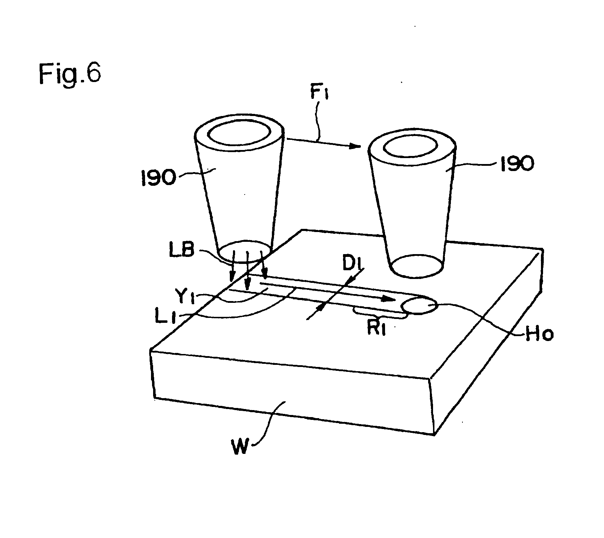

FIG. 6 is an explanatory view illustrating a laser hardening process utilizing the above-mentioned laser hardening tool 100.

The nozzle 190 of the laser hardening tool 100 proceeds above the work W in the direction of arrow F₁ while irradiating a laser beam LB, by which a hardened portion Y₁ is formed along the center line L₁ on the surface of the work W. A laser heated portion Ho is formed at a portion currently subjected to irradiation of the laser beam LB from the nozzle 190.

In area R₁ immediately behind the laser heated portion Ho, heat from the laser is diffused in the base member of the work W, by which the area is cooled rapidly.

FIG. 7 is an explanatory view illustrating the principles of laser hardening.

FIG. 7A illustrates a state in which a portion is subjected to irradiation of a laser beam LB from the nozzle 190, by which a highly heated laser heated portion Ho is created.

FIG. 7B illustrates the state of the heated portion H₁ being cooled after the nozzle had passed. The thermal energy E₁ from the laser is diffused into the base material of the work W and cooled rapidly. According to this operation, a hardened portion H₂ illustrated in FIG. 7C is created.

FIG. 8 illustrates a state in which the nozzle 190 is moved along the center line L₁, by which a laser heated portion Ho and a hardened portion is formed having a width dimension D₁.

Since the width dimension D₁ subjected to laser hardening by a single path is relatively narrow, it is necessary to perform laser hardening by moving the nozzle along a few more paths in order to form a hardened portion with a large width dimension.

FIG. 9 illustrates a state in which an area having a large width dimension D₁₀ is subjected to laser hardening.

The nozzle 190 is moved for a single pitch P₁ to positions corresponding to center lines L₁, L₂ and L₃ so as to form hardening layers H₁₁, H₁₂, H₁₃ and H₁₄.

FIG. 10 shows the state in which the processing of the hardening layer H₁₃ is completed and the adjacent layer H₁₄ is subjectedtohardening. During hardening of layer H₁₄, the energy E₁ of the layer H₁₄ being heated by the laser beam LB is conducted toward the direction of the layer H₁₃ already hardened by the hardening process. The already-hardened hardening layer H₁₃ is re-heated by this heat.

This re-heating causes the area of the already-hardened hardening layer H₁₃ adjacent to layer H₁₄ to be annealed, by which a softened layer S₁₃ is created.

In other words, if the nozzle is passed through multiple paths, in other words, if the nozzle performs overlap heating in order to obtain a hardening width D₁₀, softened layers are created between the hardened layers.

By this phenomenon, the surface of the hardened layer will have a structure in which surfaces HS having a high hardness and surfaces SS having a low hardness are adjacently arranged in a stripe-like manner.

If such uneven hardness of the hardened surface occurs, the processing depth of the grinding and cutting performed in the post process may vary slightly by the difference in hardness, by which a drawback occurs in that the process accuracy becomes uneven.

### SUMMARY OF THE INVENTION

The object of the present invention is to provide a laser hardening method that solves the problems mentioned above.

In order to achieve the above object, the laser hardening method according to the present invention comprises a step of forming in advance a conduit betweenmultiple paths on the surface of the work through which the hardening nozzle passes.

According to the present invention, upon irradiating a laser beam spot on a narrow area on the surface of a work and moving the laser beam through multiple paths to harden an area having a large width dimension, it becomes possible to prevent the already-hardened portions from being annealed.

Thus, the present invention enables to form a hardening layer having a uniform hardness.

### BRIEF DESCRIPTION OF THE DRAWINGS

FIG. 1 is a perspective view of a laser hardening tool used in the laser hardening method according to the present invention;
FIG. 2 is a cross-sectional side view of the laser hardening tool;
FIG. 3 is an upper view of FIG. 2;
FIG. 4 is an explanatory view showing the outline of the laser hardening method according to the present invention;
FIG. 5 is an explanatory view showing the cross-sectional structure of a work having been hardened by the laser hardening method of the present invention;
FIG. 6 is an explanatory view of a laser hardening process using a laser hardening tool;

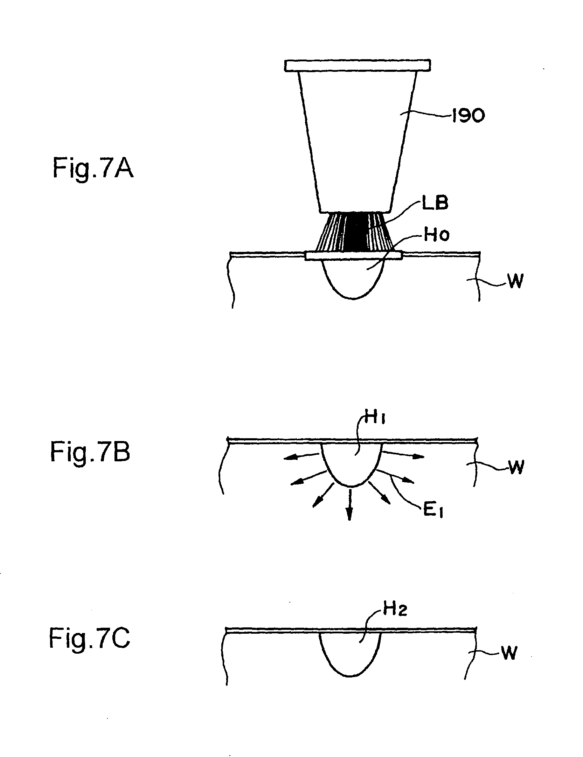

FIGS. 7A, 7B and 7C are explanatory views of a laser hardening process using a laser hardening tool;

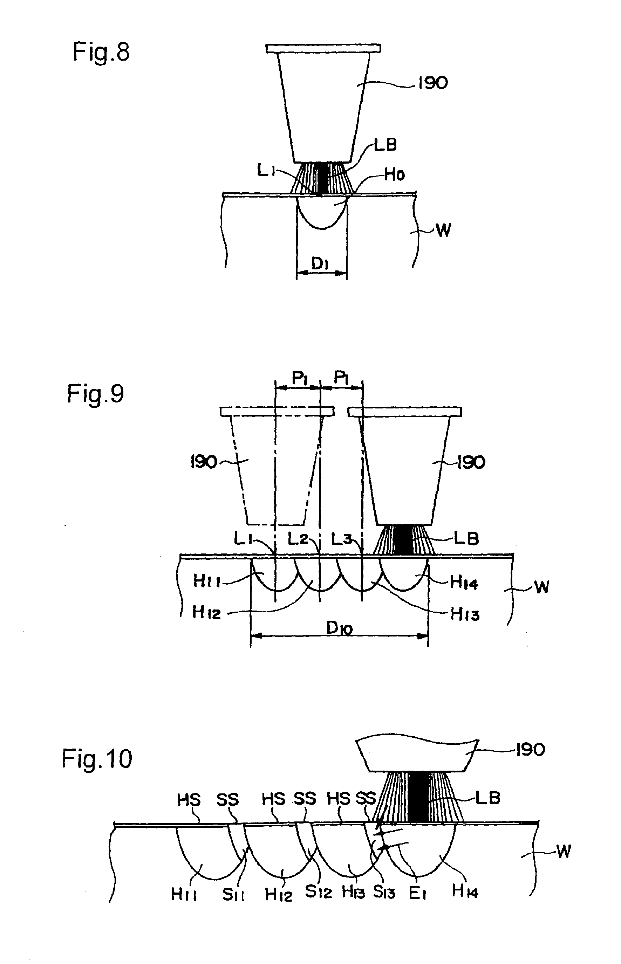

FIG. 8 is an explanatory view showing the state in which a nozzle has been moved along a center line;
FIG. 9 is an explanatory view showing the state in which laser hardening is performed on an area having a large width dimension; and
FIG. 10 is an explanatory view showing how annealing occurs.

### DETAILED DESCRIPTION OF THE PREFERRED EMBODIMENTS

FIG. 4 is an explanatory view illustrating the outline of the laser hardening method according to the present invention.

According to the laser hardening method of the present invention, conduits C₁, C₂ and C₃ are provided in advance midway between pitches P₁ along which a hardening nozzle 190 performs overlap hardening.

Here, pitch P₁ is set based on the range of thermal energy distribution of laser irradiation on an object determined by the laser output and laser output mode, the shape of the nozzle, the shape of the lens in a laser oscillator unit, and other factors. Further, a width dimension B₁ of conduits C₁, C₂ and C₃ is also set based on the range of thermal energy distribution of laser irradiation to an object determined by the laser output and laser output mode, the shape of the nozzle, the shape of the lens within a laser oscillator unit, and other factors.

FIG. 4 shows the state in which after the nozzle 190 is moved along a center line L₃ to process a hardening layer H₂₃, the nozzle 190 is moved in parallel for a single pitch P₁ to process a hardening layer H₂₄.

The thermal energy E₁ of the laser beam LB is also irradiated toward the direction of the hardening layer H₂₃, but it is blocked by the conduit C₃ and prevented from annealing the hardening layer H₂₃.

FIG. 5 shows a cross-sectional structure of a work W having been hardened by the laser hardening method of the present invention.

Since the hardening layers H₂₁, H₂₂, H₂₃ and H₂₄ are separated by conduits C₁, C₂ and C₃, the surface subjected to hardening is covered by a uniform hardened layer HS.

Therefore, the grinding and cutting in the post processes are performed on a uniform hardness, by which the process accuracies are improved.

## Claims

1. A laser hardening method for condensing a laser beam irradiated from a semiconductor laser stack to create a spot and irradiating the same through a hardening nozzle to perform hardening of a surface of a work; the method comprising
a step of forming in advance a conduit between multiple paths on the surface of the work through which the hardening nozzle passes.

2. The laser hardening method according to claim 1, wherein the conduit is formed at a center portion between adj acent paths.
